# EUROPEAN PATENT SPECIFICATION

(11) **EP 2 959 204 B1**
(45) Date of publication and mention of the grant of the patent: **12.04.2017**
(21) Application number: 13706248.5
(22) Date of filing: 25.02.2013
(51) Int. Cl.: F16M 11/08, F16M 11/22

(54) **DISPLAY PANEL MOUNTING UNIT**
ANZEIGETAFEL-MONTAGEEINHEIT
UNITÉ DE MONTAGE DE PANNEAU D'AFFICHAGE

(43) Date of publication of application: 30.12.2015
(73) Proprietor: Arçelik Anonim Sirketi, 34950 Istanbul (TR)
(72) Inventor: GULER, Cemal, 34950 Istanbul (TR); FERADOGLU, Alev, 34950 Istanbul (TR); DEMIRHAN, Dogan, 34950 Istanbul (TR); KASAPOGLU, Sevginar Oguz, 34950 Istanbul (TR); CEYLAN, Ozgur, 34950 Istanbul (TR)
(86) International application number: PCT/EP2013/053672
(87) International publication number: WO 2014/127838

(56) References cited:
- EP-A2- 1 783 420
- EP-A2- 2 228 584
- EP-A2- 2 429 187
- CN-U- 201 795 245
- CN-U- 202 118 465
- JP-U- S5 251 763
- US-A1- 2006 077 629
- US-A1- 2009 073 643

## Description

The present invention pertains to a support stand for a flat panel display device such as an LCD TV, LED TV; said support stand having improved mountability into said flat panel display devices.

Support stands are conventionally used for carrying and supporting flat panel display devices in a secure manner. Such mechanisms typically comprise a plurality of components such that a support stand device has a vertical supporting plate and a base plate. The vertical supporting plate is connected and fixed with the flat-plate television, and the base plate is connected with the supporting plate. A stand column in the form of a columnar is provided between said vertical supporting plate and said base plate.

US Patent Application US 2009/073643 A1 discloses a display device with a display panel having a front side and a rear side. A rotatable flat structure is fixed in an aperture at the bottom of the rear side of the panel and covered with a cover. The flat structure is further attached to a cylindrical shaft that is rotatably received in a sleeve which is fixed to a flat base on which the display device stands.

European Patent Application EP 2 228 584 A2 discloses a supporting device comprising a flat rear plate that is connected to the rear surface of a display panel, for example by screws. Said rear plate is further fixed to a shaft which is at its foot rotatably connected to a stand.

Chinese Patent Documents CN 202 118465 and CN 201 795 245 disclose display units comprising a plate that is fixed to the rear side of a display panel. Moreover, the plate is connected to a cylindrical shaft which is attached to a base.

European Patent Application EP 1 783420 A2 discloses an in-wall display device with a hinge assembly for connecting a display panel to a receiving unit embedded in the wall.

United States Patent Application US 2006/0077629 discloses a display having a layered structure comprising an optical filter member, a front frame, a flat panel display device, a frame member extending over the whole area of the display device, a connector with circuit boards, and a back cover. The display is joined to a support base by use of two fork-shaped connection bosses provided on the support base, the connection bosses being engaged with mounting portions of the frame member and fixed by screws.

It is to be noted that a support stand for a flat panel display device is needed to involve a small number of components as it is desirable to keep costs as low as possible and also to manufacture a product item having enhanced functionality without compromising structural simplicity. It is therefore of utter importance that a structural design should not contain mechanical elements having complex manufacturing processes or taking excessive time for assembling of various parts. This is also important considering processing of the products in manufacturing line; that is, a foot assembly which is easily mountable by end users would mean that the products are processable without the foot assemblies in manufacturing line in a much more compact manner.

It is further worthy of note that a support stand for a flat panel display device should aesthetically be acceptable, i.e. it should not have directly noticeable mechanical connection elements exposed to the outside.

A further requisite that is supposed to be one of the functions of a support stand is its suitability for rotation. This requires both a set of additional mechanical elements to allow rotatability while at the same time necessitating extra design measures to provide a reliable stand in terms of stability.

The present invention therefore provides a support stand for a flat panel display device overcoming the aforementioned inconveniences, which is defined in the characterized portion of Claim 1.

Primary object of the present invention is to provide a support stand for a flat panel display device, which is simple to manufacture with a small number of components and which requires a reduced number of man hour for assembling.

The present invention discloses a display unit with a front frame, a display panel and a rear cover. A base plate is connected with a foot shaft such that it connects said base plate with a carrier plate. Said carrier plate is a planar plate screwed on the display panel. The carrier plate is fixedly attached to said display panel and it is covered with said rear cover in its entirety such that it is not visible from the outside.

The foot shaft is first enclosed by a shaft connection means, which is a tubular element in the form of two longitudinal body parts hinged to each other. A carrier plate duct in said carrier plate then receives said foot shaft as enclosed by the shaft connection means. Said shaft connection means is fitted onto said foot shaft by means of an annular groove thereof.

The shaft connection means and the carrier plate are inter-engaged with each other by a tongue and a groove and additionally by a detaining means and an opening. While said shaft connection means is engageable with the foot shaft, the earlier is still rotatable around the latter. As said foot shaft is fixedly attachable to the base plate, the display unit is rotatable around said base plate.

A base plate connection means is fixedly attached to a metal plate such that the base plate is positioned in between the metal plate and the base plate connection means. The display unit and the carrier plate are rotatable around said foot shaft axis in a restricted manner. A first limit member on said carrier plate bears against a second limit member on the base plate connection means in this effect.

Accompanying drawings are given solely for the purpose of exemplifying a support stand for a flat panel display device whose advantages over prior art were outlined above and will be explained in brief hereinafter. The drawings are not meant to delimit the scope of protection as identified in the claims nor should they be referred to alone in an effort to interpret the scope identified in said claims without recourse to the technical disclosure in the description of the present invention.

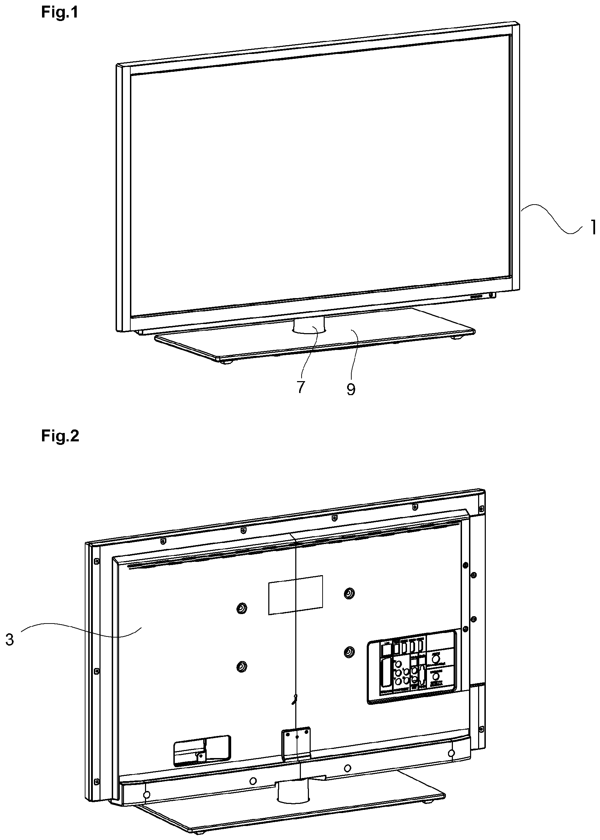

Fig. 1 demonstrates a perspective front view of the display unit according to the present invention.
Fig. 2 demonstrates a perspective rear view of the display unit according to the present invention.

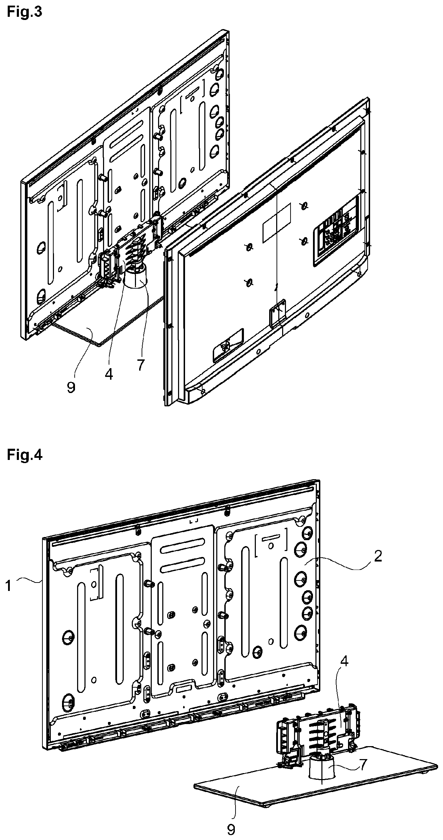

Fig. 3 demonstrates a perspective view of the display unit according to the present invention with the rear cover being removed.
Fig. 4 demonstrates a perspective view of the display unit according to the present invention with the foot carrier in unassembled form.

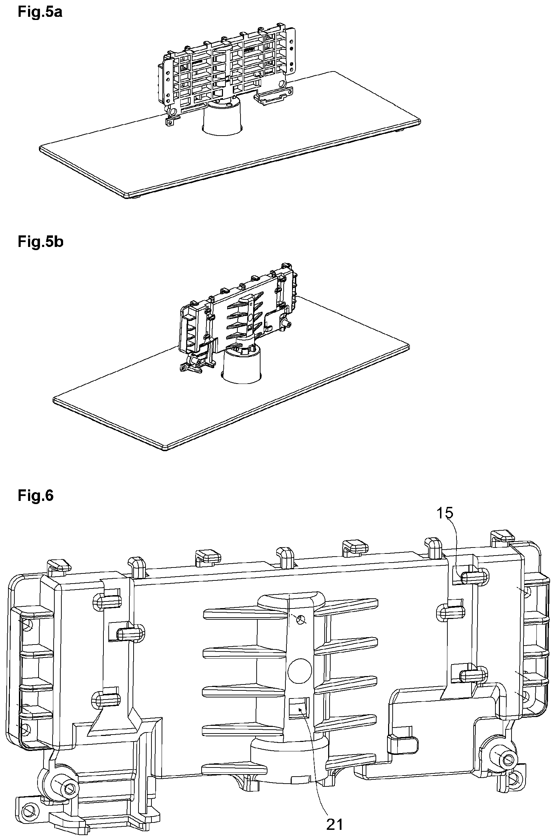

Fig. 5a and 5b respectively demonstrates front and rear perspective views of the foot carrier according to the present invention.
Fig. 6 demonstrates an enlarged rear perspective view of the foot carrier according to the present invention.

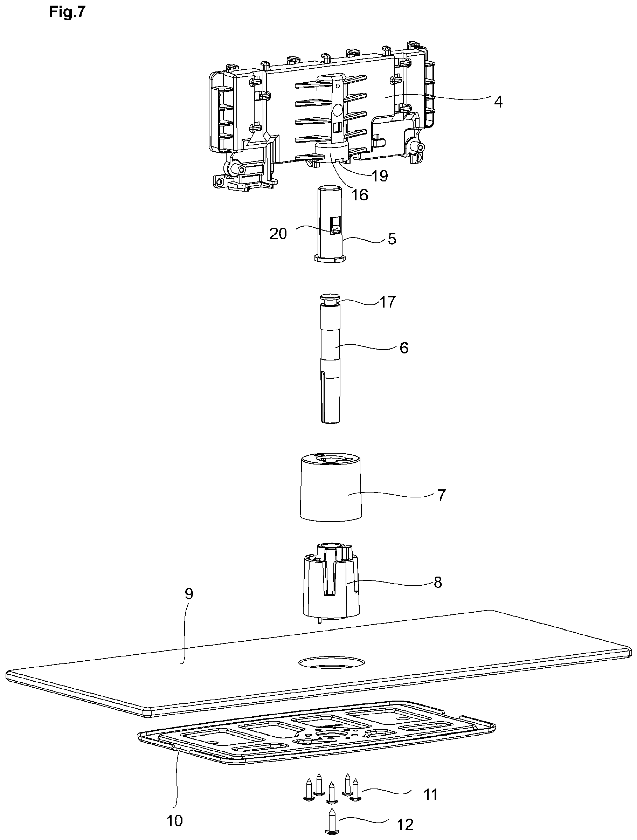

Fig. 7 demonstrates components of the support stand in unassembled form according to the present invention.

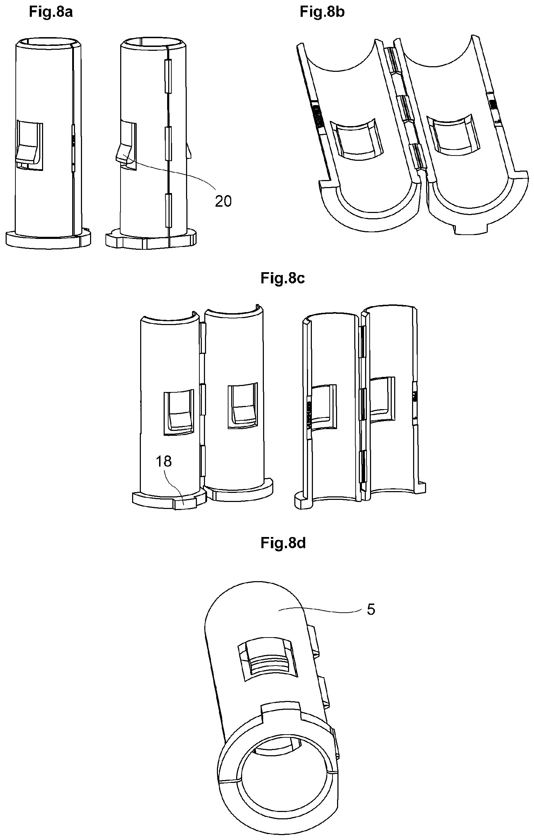

Fig. 8a, 8b, 8c and 8d demonstrate various views of the shaft connection means according to the present invention.

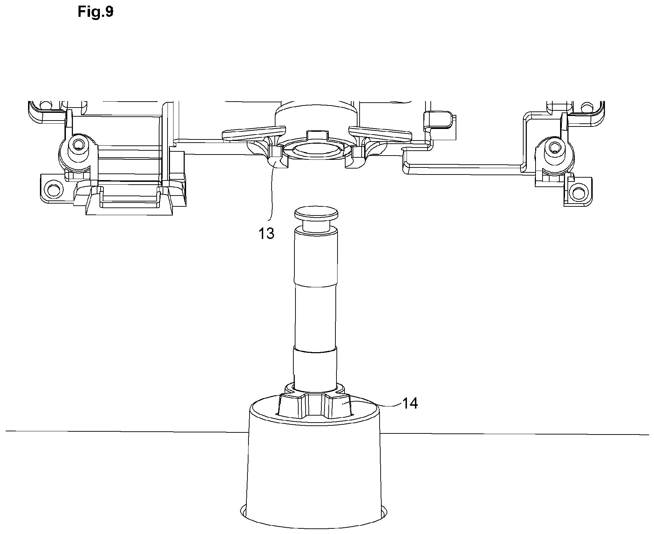

Fig. 9 demonstrates the carrier plate with other components prior to mounting according to the present invention.

The followings numerals are used in the detailed description:
(1) Front frame
(2) Display panel
(3) Rear cover
(4) Carrier plate
(5) Shaft connection means
(6) Foot shaft
(7) Foot outer cover
(8) Base plate connection means
(9) Base plate
(10) Metal plate
(11) Foot fixing means
(12) Shaft fixing means
(13) First limit member
(14) Second limit member
(15) Cable entry holes
(16) Carrier plate duct
(17) Annular groove
(18) Tongue
(19) Groove
(20) Detaining means
(21) Opening

The present invention proposes a display unit comprising a front frame (1), a display panel (2) and a rear cover (3). Said display unit further comprises a base plate (9) for carrying and supporting said display unit and a foot shaft (6) establishing mechanical connection between said base plate (9) and said display unit.

The foot shaft (6) is in mechanical communication with a carrier plate (4), which is in the form of a substantially planar plate member extending in parallel with the display panel (2) and said carrier plate (4) is sandwiched between said display panel (2) and said rear cover (3). This allows a compact and reliable connection in terms of mechanical stability. Further, the carrier plate (4), constituting the main component of the system, provides mechanical communication between the base plate (9) and the display unit, while at the same time allowing rotatability of the display unit. As the carrier plate (4) is not exposed to the outside, it is therefore considered more compact and appealing.

Accordingly, the carrier plate (4) is fixedly attached to the display panel (2) and the rear cover (3) is fixedly attached to the display panel (2) whereby the carrier plate (4) is covered with the rear cover (3) in its entirety.

The foot shaft (6) is insertable into said carrier plate (4) through a carrier plate duct (16) extending through said substantially planar surface of the carrier plate (4) and perpendicular to the base plate (9). The foot shaft (6) is enclosable by a shaft connection means (5) such that said shaft connection means (5) is engageable with an annular groove (17) of the foot shaft (6). The shaft connection means (5) has two parts foldable around a longitudinal axis to form a hollow tubular body. To this end, the shaft connection means (5) can easily be mounted on the foot shaft (6) and introduced into said carrier plate duct (16) together. In other words, the foot shaft (6) is insertable into the carrier plate (4) with the shaft connection means (5) being mounted on the foot shaft (6). This configuration allows assembling of the parts in an easy manner even by end users.

The shaft connection means (5) has a tongue (18) adapted to be received within a groove (19) of the carrier plate (4). The shaft connection means (5) has a lateral detaining means (20) engageable with an opening (21) of the carrier plate duct (16). Therefore the shaft connection means (5) is mounted into the carrier plate (4) in a fixed manner but rotation of the same together with said carrier plate (4) relative to the foot shaft (6) is enabled. This is a mechanically strong connection as the display panel (2) rotates together with the carrier plate (4) and the shaft connection means (5) around the foot shaft (6), the latter being fixed attached to the base plate (9).

The foot shaft (6) is fixedly attachable to the base plate (9) by means of a base plate connection means (8) establishing mechanical connection between the foot shaft (6) and the base plate (9). The base plate connection means (8) is fixedly attached to a metal plate (10) such that the base plate (9) is fixedly secured in between said metal plate (10) and said base plate connection means (8).

The carrier plate (4) is rotatable around said foot shaft (6) axis, such rotation being restricted by contact of a first limit member (13) disposed on the carrier plate (4), with a second limit member (14) disposed on said base plate connection means (8). The carrier plate (4) comprises cable entry holes (15) in a convenient manner.

## Claims

1. A display device comprising:
- a display unit comprising a front frame (1), a display panel (2) and a rear cover (3),
- a base plate (9) for carrying and supporting said display unit,
- a foot shaft (6) establishing mechanical connection between said base plate (9) and said display unit,
- a carrier plate (4), wherein the foot shaft (6) is in mechanical communication with the carrier plate (4), the carrier plate (4) being in the form of a substantially planar plate member extending in parallel with the display panel (2),
- said carrier plate (4) is sandwiched between the display panel (2) and the rear cover (3),
- the foot shaft (6) is insertable into the carrier plate (4) through a carrier plate duct (16) extending through said substantially planar surface of the carrier plate (4)
**characterized in that**
- there is a single foot shaft (6);
- the foot shaft (6) is enclosable by a shaft connection means (5) such that said shaft connection means (5) is engageable with an annular groove (17) of the foot shaft (6).

2. A display device according to Claim 1, **characterized in that** the carrier plate (4) is fixedly attached to the display panel (2) and the rear cover (3) is fixedly attached to the display panel (2) whereby the carrier plate (4) is covered with the rear cover (3) in its entirety.

3. A display device according to Claim 1 or 2, **characterized in that** the shaft connection means (5) has two parts foldable around a longitudinal axis to form a hollow tubular body.

4. A display device according to Claim 3, **characterized in that** the shaft connection means (5) are mounted on the foot shaft (6).

5. A display device according to Claim 4, **characterized in that** the shaft connection means (5) has a tongue (18) adapted to be received within a groove (19) of the carrier plate (4).

6. A display device according to Claim 4, **characterized in that** the shaft connection means (5) has a lateral detaining means (20) engageable with an opening (21) of the carrier plate (4).

7. A display device according to Claim 4, **characterized in that** the foot shaft (6) is fixedly attachable to the base plate (9).

8. A display device according to Claim 7, **characterized in that** the foot shaft (6) is fixedly attachable to the base plate (9) by means of a base plate connection means (8) establishing mechanical connection between the foot shaft (6) and the base plate (9).

9. A display device according to Claim 8, **characterized in that** said base plate connection means (8) is fixedly attached to a metal plate (10) such that the base plate (9) is fixedly secured in between said metal plate (10) and the base plate connection means (8).

10. A display device according to Claim 8 or 9, **characterized in that** the carrier plate (4) is rotatable around the foot shaft (6) axis, such rotation being limited by contact of a first limit member (13) disposed on the carrier plate (4) with a second limit member (14) disposed on the base plate connection means (8).

11. A display device according to any previous Claims, **characterized in that** the carrier plate (4) comprises cable entry holes (15).

## Patentansprüche

1. Anzeigevorrichtung, umfassend
- eine Anzeigeeinheit, umfassend einen Stirnrahmen (1), ein Anzeigefeld (2) und eine Rückseitenabdeckung (3),
- eine Basisplatte (9) zum Tragen und Stützen der Anzeigeeinheit,
- einen Fußschaft (6), der eine mechanische Verbindung zwischen der Basisplatte (9) und der Anzeigeeinheit herstellt,
- eine Trägerplatte (4), wobei der Fußschaft (6) in mechanischer Verbindung mit der Trägerplatte (4) steht, wobei die Trägerplatte (4) die Form eines im Wesentlichen ebenflächigen Plattenelements aufweist, das sich parallel zum Anzeigefeld (2) erstreckt,
- die Trägerplatte (4) zwischen dem Anzeigefeld (2) und der Rückseitenabdeckung (3) eingesetzt ist,
- der Fußschaft (6) durch einen Trägerplattenkanal (16), der sich durch die im Wesentlichen ebenflächige Oberfläche der Trägerplatte (4) erstreckt, in die Trägerplatte (4) einfühbar ist,
**dadurch gekennzeichnet, dass**
- ein einzelner Fußschaft (6) vorliegt;
- der Fußschaft (6) von einem Schaftverbindungsmittel (5) umschließbar ist, derart, dass das Schaftverbindungsmittel (5) mit einer Ringnut (17) des Fußschafts (6) in Eingriff treten kann.

2. Anzeigevorrichtung nach Anspruch 1, **dadurch gekennzeichnet, dass** die Trägerplatte (4) fest an dem Anzeigefeld (2) angebracht ist und die Rückseitenabdeckung (3) fest an dem Anzeigefeld (2) angebracht ist, wodurch die Trägerplatte (4) vollständig von der Rückseitenabdeckung (3) bedeckt ist.

3. Anzeigevorrichtung nach Anspruch 1 oder 2, **dadurch gekennzeichnet, dass** das Schaftverbindungsmittel (5) zwei Teile aufweist, die um eine Längsachse faltbar sind, um eine hohlen Röhrenkörper zu bilden.

4. Anzeigevorrichtung nach Anspruch 3, **dadurch gekennzeichnet, dass** der Fußschaft (6) in die Trägerplatte (4) einführbar ist, wobei das Schaftverbindungsmittel (5) an dem Fußschaft (6) angebracht ist.

5. Anzeigevorrichtung nach Anspruch 4, **dadurch gekennzeichnet, dass** das Schaftverbindungsmittel (5) eine Zunge (18) aufweist, die dazu angepasst ist, in einer Nut (19) der Trägerplatte (4) aufgenommen zu werden.

6. Anzeigevorrichtung nach Anspruch 4, **dadurch gekennzeichnet, dass** das Schaftverbindungsmittel (5) ein seitliches Haltemittel (20) aufweist, das mit einer Öffnung (21) der Trägerplatte (4) in Eingriff treten kann.

7. Anzeigevorrichtung nach Anspruch 4, **dadurch gekennzeichnet, dass** der Fußschaft (6) fest an der Basisplatte (9) anbringbar ist.

8. Anzeigevorrichtung nach Anspruch 7, **dadurch gekennzeichnet, dass** der Fußschaft (6) mithilfe eines Basisplattenverbindungsmittels (8), das eine mechanische Verbindung zwischen dem Fußschaft (6) und der Basisplatte (9) herstellt, fest an der Basisplatte (9) anbringbar ist.

9. Anzeigevorrichtung nach Anspruch 8, **dadurch gekennzeichnet, dass** das Basisplattenverbindungsmittel (8) fest an einer Metallplatte (10) angebracht ist, derart, dass die Basisplatte (9) fest zwischen der Metallplatte (10) und dem Basisplattenverbindungsmittel (8) gesichert ist.

10. Anzeigevorrichtung nach Anspruch 8 oder 9, **dadurch gekennzeichnet, dass** die Trägerplatte (4) um die Achse des Fußschafts (6) drehbar ist, wobei die Drehung durch Kontakt eines ersten Begrenzungselements (13), das an der Trägerplatte (4) angeordnet ist, mit einem zweiten Begrenzungselement (14) begrenzt wird, das an dem Basisplattenverbindungsmittel (8) angeordnet ist.

11. Anzeigevorrichtung nach einem der vorangehenden Ansprüche, **dadurch gekennzeichnet, dass** die Trägerplatte (4) Kabeleintrittsbohrungen (15) umfasst.

## Revendications

1. Un dispositif d'affichage comprenant
- une unité d'affichage comprenant un cadre avant (1), un panneau d'affichage (2) et un couvercle arrière (3),
- une plaque de base (9) pour porter et supporter ladite unité d'affichage,
- un arbre de pied (6) qui crée la liaison mécanique entre ladite plaque de base (9) ladite unité d'affichage,
- une plaque de support (4), où l'arbre de pied (6) est en communication mécanique avec la plaque de support (4), la plaque de support (4) étant en forme d'un élément de plaque sensiblement plan s'étendant parallèlement avec le panneau d'affichage (2),
- ladite plaque de support (4) est prise en sandwich entre le panneau d'affichage (2) et le couvercle arrière (3),
- l'arbre de pied (6) peut être inséré dans la plaque de support (4) par un conduit de plaque de support (16) s'étendant à travers ladite surface sensiblement plan de la plaque de support (4),
**caractérisé en ce que**
- il existe un seul arbre de pied (6),
- l'arbre de pied (6) peut être entouré par un moyen de liaison d'arbre (5) de telle sorte que ledit moyen de liaison d'arbre (5) peut venir en prise avec une rainure annulaire (17) de l'arbre de pied (6).

2. Un dispositif d'affichage selon la Revendication 1, **caractérisé en ce que** la plaque de support (4) est fixée au panneau d'affichage (2) et le couvercle arrière (3) est fixé au panneau d'affichage (2) de telle sorte que la plaque de support (4) est recouverte par le couvercle arrière (3) en totalité.

3. Un dispositif d'affichage selon la Revendication 1 ou 2, **caractérisé en ce que** le moyen de liaison d'arbre (5) présente deux parties pliables autour d'un axe longitudinal pour former un corps tubulaire creux.

4. Un dispositif d'affichage selon la Revendication 3, **caractérisé en ce que** l'arbre de pied (6) peut être inséré dans ladite plaque de support (4) lorsque le moyen de liaison d'arbre (5) est monté sur l'arbre de pied (6).

5. Un dispositif d'affichage selon la Revendication 4, **caractérisé en ce que** le moyen de liaison d'arbre (5) présente une languette (18) adaptée à être reçue dans une rainure (19) de la plaque de support (4).

6. Un dispositif d'affichage selon la Revendication 4, **caractérisé en ce que** le moyen de liaison d'arbre (5) présente une détente latérale (20) qui peut venir en prise avec une ouverture (21) de la plaque de support (4).

7. Un dispositif d'affichage selon la Revendication 4, **caractérisé en ce que** l'arbre de pied (6) est fixé à la plaque de base (9).

8. Un dispositif d'affichage selon la Revendication 7, **caractérisé en ce que** l'arbre de pied (6) est fixé à la plaque de base (9) par l'intermédiaire d'un moyen de liaison de plaque de base (8) créant une liaison mécanique entre l'arbre de pied (6) et la plaque de base (9).

9. Un dispositif d'affichage selon la Revendication 8, **caractérisé en ce que** ledit moyen de liaison de plaque de base (8) est fixé à une plaque métallique (10) de telle sorte que la plaque de base (9) est fixée entre ladite plaque métallique (10) et le moyen de liaison de plaque de base (8).

10. Un dispositif d'affichage selon la Revendication 8 ou 9, **caractérisé en ce que** la plaque de support (4) peut être tournée autour de l'axe de l'arbre de pied (6), cette rotation étant limitée par le contact d'un premier élément de limitation (13) disposé sur la plaque de support (4) et un deuxième élément de limitation (14) disposé sur le moyen de liaison de plaque de base (8).

11. Un dispositif d'affichage selon l'une quelconque des revendications précédentes, **caractérisé en ce que** la plaque de support (4) comprend des trous d'entrée de câble (15).
